(19) Europäisches Patentamt

European Patent Office

Office européen des brevets

(11) **EP 1 220 432 A2**

(12) **EUROPEAN PATENT APPLICATION**

(43) Date of publication:
**03.07.2002 Bulletin 2002/27**

(51) Int Cl.$^7$: **H02M 1/12**

(21) Application number: **01310487.2**

(22) Date of filing: **14.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **19.12.2000 JP 2000385005**

(71) Applicant: **FUJI ELECTRIC CO., LTD.**
**Kawasaki-shi, Kanagawa 210-0856 (JP)**

(72) Inventors:
• **Igarashi, Seiki**
  **Kawasaki-ku, Kawasaki 210 (JP)**
• **Tanigawa, Taichi**
  **Kawasaki-ku, Kawasaki 210 (JP)**

(74) Representative: **Bridge-Butler, Alan James et al**
**G.F. Redfern & Co.**
**Redfern House**
**149/151 Tarring Road**
**Worthing, West Sussex BN11 4HE (GB)**

(54) **Noise reduction apparatus for electric power conversion apparatus**

(57)    The object of the present invention is to provide a noise reduction apparatus, which facilitates using current control devices with a low breakdown voltage, improving the operating speed and the noise compensation capability, minimizing the high frequency filter, and reducing the manufacturing costs of the electric power conversion apparatus.

This object is achieved by a noise reduction apparatus according to the invention which includes a noise-compensation-current supply circuit 6A connected to a secondary winding 5d of a noise current detector 5; the noise-compensation-current supply circuit 6A including a series circuit of transistors $Tr_1$ and $Tr_2$ as current control devices, the transistors $Tr_1$ and $Tr_2$ switching on or off in opposite to each other, the mutual connection point of the transistors $Tr_1$ and $Tr_2$ being grounded via a coupling capacitor $C_1$; and Zener diodes $ZD_1$ and $ZD_2$ connected between the respective ends of the series circuit and the respective terminals of a DC smoothing capacitor $C_O$. The Zener diodes $ZD_1$ and $ZD_2$ facilitate suppressing the voltage applied to the output terminals of the transistors $Tr_1$ and $Tr_2$ and using devices with a low breakdown voltage for the transistors $Tr_1$ and $Tr_2$.

$$i_C = C\frac{dv}{dt}$$

*Fig. 1*

**Description**

The present invention relates to a noise reduction apparatus for inverters and such electric power conversion apparatuses. More specifically, the present invention relates to a noise reduction apparatus for reducing the common mode noise and the normal mode noise caused by the on/off of the switching devices of an electric power conversion apparatus driving an AC motor.

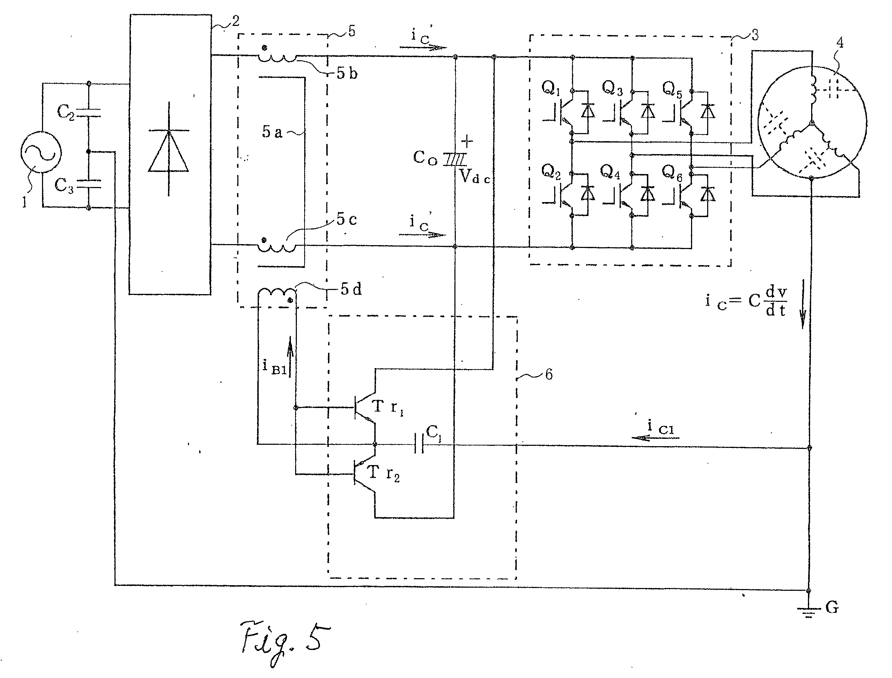

Figure 5 is a circuit diagram of a conventional noise reduction apparatus applied to a system, which drives a three-phase induction motor via a three-phase converter. The noise reduction apparatus described in Figure 5 is substantially the same with the noise reduction apparatus disclosed in Japanese Unexamined Laid Open Patent Application H09 (1997)-266677.

Shown in Figure 5 are a single-phase AC power supply 1; a single-phase rectifying bridge circuit 2 as a converter; a three-phase inverter circuit 3 including semiconductor switching devices $Q_1$ through $Q_6$ such as IGBT's (insulated gate bipolar transistors), and diodes connected in opposite parallel to the respective semiconductor switching devices; a three-phase induction motor 4 as a load of the inverter circuit 3; a noise current detector 5 such as a zero-phase current transformer formed of a ring core 5a, a pair of primary windings 5b and 5c, and a secondary winding 5d; a noise-compensation-current supply circuit 6 connected to both ends of the secondary winding 5d; and a DC smoothing capacitor $C_O$ connected to a DC intermediate circuit between the rectifying circuit 2 and the inverter circuit 3. The polarity of each winding of the noise current detector 5 is set as shown in Figure 5.

The rectifying circuit 2, the DC smoothing capacitor $C_O$, and the inverter circuit 3 constitute an electric power conversion apparatus.

The noise-compensation-current supply circuit 6 includes an NPN transistor $Tr_1$, a PNP transistor $Tr_2$, and a coupling capacitor $C_1$ for cutting the DC component. Filter capacitors $C_2$ and $C_3$ are connected to both terminals of the AC power supply 1.

Both ends of the secondary winding 5d are connected to the bases and the emitters of the transistors $Tr_1$ and $Tr_2$ constituting the noise-compensation-current supply circuit 6. The collector of the transistor $Tr_1$ is connected to the positive terminal of the capacitor $C_O$, and the collector of the transistor $Tr_2$ to the negative terminal of the capacitor $C_O$.

The frame of the induction motor 4 is grounded. The emitters of the transistors $Tr_1$ and $Tr_2$ are connected to a grounding point G via the coupling capacitor $C_1$. The mutual connection point of the capacitors $C_2$ and $C_3$ is also connected to the grounding point G.

In Figure 5, the switching devices $Q_1$ through $Q_6$ of the inverter circuit 3 are controlled by PWM (pulse code modulation). The PCM control circuit is omitted from Figure 5.

The operations of the conventional noise reduction apparatus will be described below. The switching devices $Q_1$ through $Q_6$ of the inverter circuit 3 are controlled to switch on and off by the PWM pulses. The induction motor 4 is driven by the output of the inverter circuit 3.

Since electrostatic capacitance (floating capacitance) C exists between the windings of the induction motor 4 and the grounding point G as shown by the broken lines in Figure 5, a leakage current pulse (common mode noise current) $I_C$ flows through the electrostatic capacitance C every time when a voltage pulse is applied from the inverter circuit 3 to the induction motor 4. The noise current flowing straight through the grounding point G causes electric shock and mal-function of the ground breaker. Therefore, it is necessary to remove the noise current.

The noise current detector 5 detects the noise current (zero-phase current component) from the difference between the currents $i_C'$ and $i_C'$ flowing through a pair of power supply lines of the DC intermediate circuit. When a noise current is detected, the noise current detector 5 make a detection current $i_{B1}$ flow through the secondary winding 5d. The detection current $i_{B1}$ drives the transistors $Tr_1$ or $Tr_2$.

The detection current $i_{B1}$, which has flowed into the base of the transistor $Tr_1$ or $Tr_2$, is amplified by the transistor $Tr_1$ or $Tr_2$, causing a current $ic_1$. The transistors $Tr_1$ and $Tr_2$ switches on and off in opposite to each other such that when the transistor $Tr_1$ is ON, the transistor $Tr_2$ is OFF, and, when the transistor $Tr_1$ is OFF, the transistor $Tr_2$ is ON.

When the noise current **i**c flows in the direction indicated by the arrow in Figure 5, the detection current $i_{B1}$ caused by the currents $i_C'$ and $i_C'$ flowing through the primary windings 5b and 5c flows through the secondary winding 5d. The current $i_{B1}$ switches on the transistor $Tr_2$, and the noise compensation current $ic_1$ circulates from the capacitor $C_O$ to the capacitor $C_O$ via any one of the switching devices on the upper arm of the inverter circuit 3, the electrostatic capacitance C of the induction motor 4, the coupling capacitor $C_1$, and the transistor $Tr_2$.

Since most of the noise current $i_C$ flows as the current $Ic_1$, the current $i_C'$ $(= i_C — i_{C1})$ flowing to the output side of the rectifying circuit 2 is reduced, and the noise voltage (the noise voltage at the AC input side terminal of the rectifying circuit 2) is also reduced.

Since the direction of the current $i_{B1}$ flowing through the secondary winding 5d is also opposite when the direction of the noise current $i_C$ is opposite, the transistor $Tr_1$ is switched on. Therefore, the noise compensation current $ic_1$ circulates from the capacitor $C_O$ to the capacitor $C_O$ via the transistor $Tr_1$, the coupling capacitor $C_1$, the electrostatic

capacitance of the induction motor 4, and any one of the switching devices on the lower arm of the inverter circuit 3.

Since most of the noise current $\mathbf{i}_C$ flows as the $\mathbf{ic}_1$ in this case too, the current $\mathbf{i}_C'$ (= $\mathbf{i}_C$—$\mathbf{i}_{C1}$) is reduced, and the noise voltage is also reduced.

Since the transistors $Tr_1$ and $Tr_2$ constituting the noise-compensation-current supply circuit 6 are connected via the respective collectors thereof to the smoothing capacitor $C_O$, it is required that the breakdown voltages of the transistors $Tr_1$ and $Tr_2$ be high enough to endure the voltage as high as the DC voltage of the inverter circuit 3.

In the general purpose inverter, the AC input voltage (the effective value) thereof is 200 V, the DC voltage (DC intermediate voltage) is around 500 V. In the general purpose inverter, the AC input voltage thereof is 400 V, the DC voltage is around 1000 V. Therefore, it is necessary for the transistors $Tr_1$ and $Tr_2$ to exhibit a breakdown voltage high enough to endure the DC voltage described above.

However, since the transistor, purchasable from the market and exhibiting a breakdown voltage of 500 V, operates twice as slowly as the transistor, the breakdown voltage thereof is 300 V, the transistor with the breakdown voltage of 500 V is not so effective to reduce the noise current.

Especially in the high frequency range, wherein the operating frequency of the inverter is 1 MHz or higher, the transistors constituting the noise-compensation-current supply circuit 6 sometimes cannot operate at such a high speed. Sometimes, the transistors constituting the noise-compensation-current supply circuit 6 operate in opposite to the polarity of the noise current $\mathbf{i}_C$, amplifying the noise voltage in the high frequency range.

To obviate this problem, it is necessary to employ a large high frequency filter to cut the high frequency noises in addition to the filter capacitors $C_2$ and $C_3$. The additional large high frequency filter enlarges the electric power conversion apparatus and soars the costs of the electric power conversion apparatus.

In view of the foregoing, it is a first object of the invention to provide a noise reduction apparatus, which facilitates using devices, the breakdown voltage thereof is lower than the DC voltage of the inverter and such an electric power conversion apparatus, for the current control devices of the noise-compensation-current supply circuit.

It is a second object of the invention to provide a noise reduction apparatus, which facilitates preventing high frequency noises from occurring and minimizing the high frequency filter and the entire electric power conversion apparatus even when the operating frequency of the electric power conversion apparatus is in the high frequency range.

It is a third object of the invention to provide a noise reduction apparatus, which facilitates minimizing the high frequency filter, reducing the number of constituent parts and elements, and reducing the manufacturing costs of the electric power conversion apparatus.

According to a first aspect of the invention, there is provided a noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a noise current caused by the switching on and off of the semiconductor switching devices and flowing through the electric power conversion apparatus, the noise reduction apparatus including: a noise current detecting means, the noise current detecting means detecting the noise current and outputting a detection signal indicating the noise current; a noise-compensation-current supply means, the noise-compensation-current supply means supplying a noise compensation current for reducing the detected noise current to the electric power conversion apparatus; the noise-compensation-current supply means including a series circuit including a current control device and a constant DC voltage supply, the output current of the current control device being controlled based on the detection signal from the noise current detecting means, the current control device exhibiting a breakdown voltage lower than the voltage of the DC intermediate circuit.

Advantageously, the noise current detecting means is connected to the DC intermediate circuit to detect a common mode noise current flowing from the electric power conversion apparatus to the grounding point via the load of the electric power conversion apparatus, the noise-compensation-current supply means generates, based on the detection signal from the noise current detecting means, a current for cancelling the noise current flowing through the DC intermediate circuit and supplies the current for cancelling to the DC intermediate circuit.

Advantageously, the noise current detecting means is connected to the DC intermediate circuit to detect a normal mode noise current flowing between the AC power supply and the load of the electric power conversion apparatus via the electric power conversion apparatus, the noise-compensation-current supply means generates, based on the detection signal from the noise current detecting means, a current for cancelling the noise current flowing through the DC intermediate circuit and supplies the current for cancelling to the DC intermediate circuit.

According to a second aspect of the invention, there is provided a noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a common mode noise current caused by the switching on and off of the semiconductor switching devices and flowing from the electric power conversion apparatus to the grounding point via the load of the electric power conversion apparatus, the noise reduction apparatus including: a noise current detecting means including a transformer, the transformer detecting the difference between the noise current flowing through one of the power supply lines of the DC intermediate circuit and the noise current flowing through the other one of the power supply lines, the noise current detecting means outputting a detection signal indicating the current difference; a noise-compensation-current supply means, the noise-compensation-means supply circuit supplying a noise compensation current for reducing the detected noise current to the electric power conversion apparatus; the noise-compensation-current supply means including a pair of current control devices and a constant DC voltage supply or a pair of constant DC voltage supplies; the first output terminals of the respective current control devices being grounded, the current control devices controlling the output current thereof based on the detection signal from the transformer; the constant DC voltage supply being connected between the second output terminal of either one of the current control devices and either one of the terminals of the DC smoothing capacitor, or the constant DC voltage supplies being connected between the respective second output terminals of the current control devices and the respective terminals of the DC smoothing capacitor; and the current control devices exhibiting a breakdown voltage lower than the voltage of the DC intermediate circuit

According to a third aspect of the invention, there is provided a noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a normal mode noise current caused by the switching on and off of the semiconductor switching devices and flowing between the AC power supply and the load of the electric power conversion apparatus via the electric power conversion apparatus, the noise reduction apparatus including: a noise current detecting means including a transformer, the transformer detecting the sum of the noise current flowing through one of the power supply lines of the DC intermediate circuit and the noise current flowing through the other one of the power supply lines, the noise current detecting means outputting a detection signal indicating the current sum; a noise-compensation-current supply means, the noise-compensation-means supply circuit supplying a noise compensation current for reducing the detected noise current to the electric power conversion apparatus; the noise-compensation-current supply means including a pair of current control devices and a constant DC voltage supply or a pair of constant DC voltage supplies; the first output terminals of the respective current control devices being connected to the input side of the converter, the current control devices controlling the output current thereof based on the detection signal from the transformer; the constant DC voltage supply being connected between the second output terminal of either one of the current control devices and either one of the terminals of the DC smoothing capacitor, or the constant DC voltage supplies being connected between the respective second output terminals of the current control devices and the respective terminals of the DC smoothing capacitor; and the current control devices exhibiting a breakdown voltage lower than the voltage of the DC intermediate circuit.

According to a fourth aspect of the invention, there is provided a noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a common mode noise current caused by the switching on and off of the semiconductor switching devices and flowing from the electric power conversion apparatus to the grounding point via the load of the electric power conversion apparatus, the noise reduction apparatus including: a noise current detecting means including a transformer, the transformer detecting the difference between the noise current flowing through one of the power supply lines of the DC intermediate circuit and the noise current flowing through the other one of the power supply lines, the noise current detecting means outputting a detection signal indicating the current difference; a noise-compensation-current supply means, the noise-compensation-means supply circuit supplying a noise compensation current for reducing the detected noise current to the electric power conversion apparatus; the noise-compensation-current supply means including a series circuit formed of a first current control device and a second current control device, and a constant DC voltage supply connected between one end of the series circuit and the DC smoothing capacitor; the first current control device and the second control device switching on and off in opposite to each other based on the detection signal from the transformer; the mutual connection point of the first current control device and the second current control device being grounded; and the first current control device and the second current control device exhibiting a breakdown voltage lower than the voltage of the DC intermediate circuit

According to a fifth aspect of the invention, there is provided a noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a normal mode noise current caused by the switching on and off of the semiconductor switching devices and flowing between the AC power supply and the load of the electric power conversion apparatus via the electric power conversion apparatus, the noise reduction apparatus including: a noise current detecting means including a transformer, the transformer detecting the sum of the noise current flowing through one of the power supply lines of the DC intermediate circuit and the noise current flowing through the other one of the power supply lines, the noise current detecting means outputting a detection signal indicating the current sum; a noise-compensation-current supply means, the noise-compensation-means supply circuit supplying a noise compensation current for reducing the detected noise current to the electric power conversion apparatus; the noise-compensation-current supply means including a series circuit formed of a first current control device and a second current control device, and a constant DC voltage supply connected between one end of the series circuit and the DC smoothing capacitor; the first current control device and the second control device switching on and off in opposite to each other based on the detection signal from the transformer; the mutual connection point of the first current control device and the second current control device being connected to the input side of the converter; and the first current control device and the second current control device exhibiting a breakdown voltage lower than the voltage of the DC intermediate circuit.

According to a sixth aspect of the invention, the noise-compensation-current supply means, which supplies a noise compensation current for compensating the common mode noise current, includes a series circuit formed of a first current control device and a second current control device, a first constant DC voltage supply, and a second constant DC voltage supply, and the first constant DC voltage supply and the second constant DC voltage supply are connected between the respective ends of the series circuit and the respective terminals of the DC smoothing capacitor

According to a seventh aspect of the invention, the noise-compensation-current supply means, which supplies a noise compensation current for compensating the normal mode noise current, includes a series circuit formed of a first current control device and a second current control device, a first constant DC voltage supply, and a second constant DC voltage supply, and the first constant DC voltage supply and the second constant DC voltage supply are connected between the respective ends of the series circuit and the respective ends of the DC smoothing capacitor.

Advantageously, the output terminals on the side, thereon any constant DC voltage supply is not connected, of the current control devices are grounded via a coupling capacitor.

Advantageously, the output terminals on the side, thereon any constant DC voltage supply is not connected, of the current control devices are connected to the mutual connection point of filter capacitors connected between the input terminals of the converter.

Advantageously, the constant DC voltage supply is a Zener diode.

Now the invention will be described in detail hereinafter with reference to the accompanied drawing figures which illustrate the preferred embodiments of the invention, in which:

Figure 1 is a circuit diagram of an electric power conversion apparatus including a noise reduction apparatus according to the first embodiment of the invention;
Figure 2 is an equivalent circuit diagram of the three-phase inverter of Figure 1;
Figure 3 is a circuit diagram of an electric power conversion apparatus including a noise reduction apparatus according to the second embodiment of the invention;
Figure 4(a) is a circuit diagram showing another connection of the Zener diode as a constant DC voltage supply in the noise-compensation-current supply circuit;
Figure 4(b) is a circuit diagram showing still another connection of the Zener diode as a constant DC voltage supply in the noise-compensation-current supply circuit; and
Figure 5 is a circuit diagram of a conventional noise reduction apparatus applied to a system, which drives a three-phase induction motor via a three-phase converter.

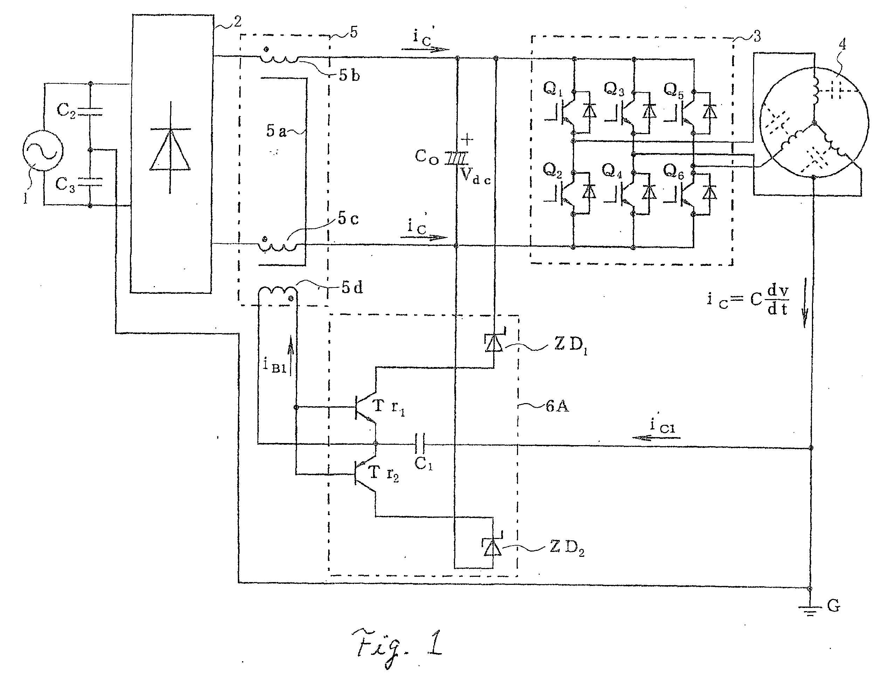

In Figure 1, the same reference numerals as used in Figure 5 are used to designate the same constituent elements.

Shown in Figure 1 are a single-phase AC power supply 1; a single-phase rectifying bridge circuit 2; a three-phase inverter circuit 3 including semiconductor switching devices $Q_1$ through $Q_6$ such as IGBT's (insulated gate bipolar transistors) and diodes connected in opposite parallel to the respective semiconductor switching devices; a three-phase induction motor 4 as a load of the inverter circuit 3; a noise current detector 5 such as a zero-phase current transformer formed of a ring core 5a, a pair of primary windings 5b and 5c, and a secondary winding 5d; filter capacitors $C_2$ and $C_3$; and a DC smoothing capacitor Co

The noise-compensation-current supply circuit 6A is different from the conventional noise-compensation-current supply circuit 6 shown in Figure 5 in that a Zener diode $ZD_1$ as a first constant DC voltage supply is connected between the transistor $Tr_1$ as a current control device and the positive terminal of the capacitor $C_O$, and a Zener diode $ZD_2$ as a second constant DC voltage supply is connected between the transistor $Tr_2$ as a current control device and the negative terminal of the capacitor Co.

The Zener diodes are connected such that the anode of the Zener diode $ZD_1$ is connected to the collector of the transistor $Tr_1$, and the cathode of the Zener diode $ZD_2$ is connected the collector of the transistor $Tr_2$.

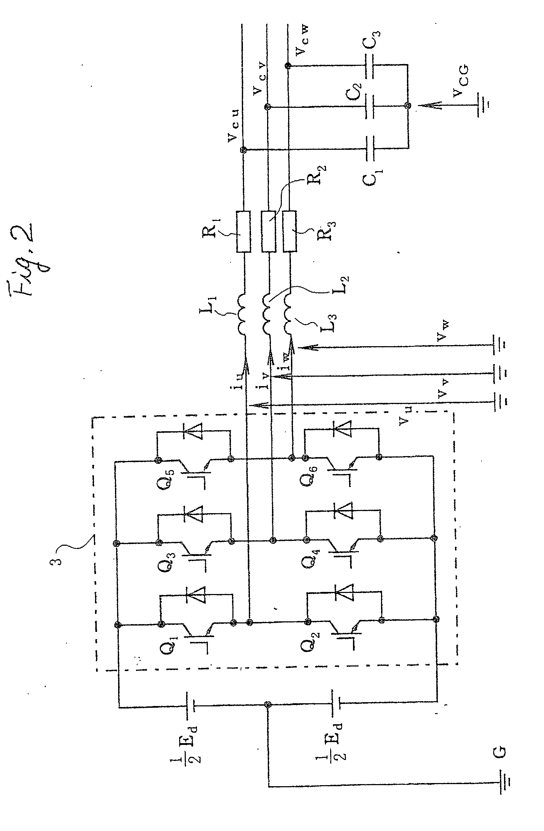

Figure 2 is an equivalent circuit diagram of the three-phase inverter. Referring now to Figure 2, the wiring inductance of each output line of each phase between the connection point of the upper and lower arms of the inverter circuit 3 and the induction motor 4 is represented by $L_1$, $L_2$ or $L_3$, and the resistance, thereof by $R_1$, $R_2$ or $R_3$. The floating capacitance, which the induction motor 4 has between the grounding point, is represented by $C_1$, $C_2$ or $C_3$. The DC voltage of the inverter is represented by Ed (which is Vdc in Figure 1). It is assumed that the point, the potential thereof is Ed/2, is grounded.

The voltages of the phases outputted from the inverter circuit 3 are represented by $\mathbf{v}_U$, $\mathbf{v}_V$ and $\mathbf{v}_W$, and the currents of the phases by $\mathbf{i}_U$, $\mathbf{i}_V$ and $\mathbf{i}_W$. Then, the voltages of the phases are expressed by the following voltage equations (1) through (3). In the equations (1) through (3), $\mathbf{v}_{CG}$ represents the potential to the ground at the neutral point of the output terminals of the three-phase inverter beyond the wiring inductance $L_1$ through $L_3$ and the resistance $R_1$ through $R_3$, and $\mathbf{v}_{CU}$, $\mathbf{v}_{CV}$ and $\mathbf{v}_{CW}$ represent the potentials of the three phases. The quantities such as the voltages and the currents described above are vector quantities.

$$v_U — v_{CG} = L_1 \, di_{U}/dt + R_1 {\cdot} i_U + v_{CU} \tag{1}$$

$$v_V — v_{CG} = L_2 \, di_{V}/dt + R_2 {\cdot} i_V + v_{CV} \tag{2}$$

$$v_W — v_{CG} = L_3 \, di_{W}/dt + R_3 {\cdot} i_W + v_{CW} \tag{3}$$

As described in the following equations (4) through (6), it is assumed that the wiring inductance values $L_1$ through $L_3$ of the output lines for the three phases of the inverter are equal to each other, the resistance values $R_1$ through $R_3$ of the output lines of the inverter are equal to each other, and the floating capacitance values $C_1$ trough $C_3$ are equal to each other.

$$L_1 = L_2 = L_3 = L \tag{4}$$

$$R_1 = R_2 = R_3 = R \tag{5}$$

$$C_1 = C_2 = C_3 = C \tag{6}$$

The following equation (7) is obtained by adding the equations (1) through (3).

$$v_U + v_V + v_W — 3v_{CG}$$

$$= L{\cdot}d \, (i_U + i_V + i_W)/dt + R{\cdot}(i_U + i_V + i_W) + v_{CU} + v_{CV} + v_{CW} \tag{7}$$

Assuming that the output voltages of the three phases are in equilibrium, the following equations (8) and (9) are obtained.

$$v_U + vv + vw = 0 \tag{8}$$

$$i_U + iv + iw = 0 \tag{9}$$

By substituting the equations (8) and (9) for $\mathbf{v}_{CU} + \mathbf{v}_{CV} + \mathbf{v}_{CW}$ and for $\mathbf{i}_U + \mathbf{i}_V + \mathbf{i}_W$ in the equation (7), $\mathbf{v}_{CG}$ is described by the following equation (10).

$$v_{CG} = (v_U + v_V + v_W)/3 \qquad\qquad (10)$$

According to the equation (10), the potential $V_{CG}$ to the ground at the neutral point of the output terminals of the three-phase inverter is one third the sum of the voltages of the three phase.

Since each of the voltages $v_U$, $v_V$ and $v_W$ of the three phase is (/1/2) Ed or (1/2) Ed depending on the on/off states of the switching devices $Q_1$ through $Q_6$, each phase voltage varies with the variation of the voltage Ed. Since one third of the variations of the phase voltages causes the variation $\Delta v_{CG}$ of the potential to the ground at the AC neutral point when the state of the switching devices for one phase is changed, the potential variation $\Delta v_{CG}$ is described by the following equation (11).

$$\Delta v_{CG} = Ed/3 \qquad\qquad (11)$$

In other words, when the switching devices of the three-phase inverter operate, the potential $V_{CG}$ to the ground at the AC neutral point changes by one third the DC voltage Ed.

Due to this, the voltage between the collector and the emitter of the transistors $Tr_1$ and $Tr_2$ of the noise-compensation-current supply circuit 6A in Figure 1 changes by one third the DC voltage Ed (that is Vdc). Therefore, it is enough for the transistors $Tr_1$ and $Tr_2$ to exhibit a breakdown voltage as high as Ed/3. By setting the Zener voltage of the Zener diodes ZD1 and Zd2, which are constant DC voltage supplies, at (2/3)Ed, the noise compensation current $i_{C1}$ may be made to flow in the same way as the conventional noise-compensation-current supply circuit 6, even when the voltages applied to the transistors lowers.

It is necessary for the conventional general purpose inverter, the AC input voltage thereto is 200 V, to use transistors, the breakdown voltage thereof is around 500 V. In contrast, it is enough for the general purpose inverter according to the invention, the AC input voltage thereto is 200 V, to use transistors, the breakdown voltage thereof is around 150 V. It is necessary for the conventional general purpose inverter, the AC input voltage thereto is 400 V, to use transistors, the breakdown voltage thereof is around 1000 V. In contrast, it is enough for the general purpose inverter according to the invention, the AC input voltage thereto is 400 V, to use transistors, the breakdown voltage thereof is around 300 V.

The basic operation for compensating the noise current according to the first embodiment is the same with that according to the prior art. In detail, currents $i_C'$ and $i_C'$ flow through the primary windings 5b and 5c of the noise current detector 5, when a noise current $i_C$, caused by the switching operations of the inverter circuit 3, flows in the direction indicated by the arrow in Figure 1. A current $i_{B1}$, which flows through the secondary winding 5d based on the difference between the currents $i_C'$ and $i_C'$, switches on the transistor $Tr_2$. When the transistor $Tr_2$ is switched on, a noise compensation current $i_{C1}$ flows via the coupling capacitor $C_1$. Since the most part of the noise current $i_C$ flows as the noise compensation current $i_{C1}$ toward the current control devices, the current $i_C'$ (=$i_C.i_{C1}$) is reduced, and the noise voltage at the input side terminal of the rectifying circuit 2 is also reduced.

When the transistor $Tr_2$ is ON, the voltage between the collector and the emitter of the transistor $Tr_2$ is about one third the DC voltage Vdc due to the function of the Zener diode $DZ_2$.

When the noise current $i_C$ flows in the opposite direction, the current $i_{B1}$, which flows through the secondary winding 5d in the direction opposite to that described in Figure 1, switches on the other transistor $Tr_1$, and the noise compensation current $i_{C1}$ flows via the coupling capacitor $C_1$. Since the most part of the noise current $i_C$ flows as the noise compensation current $i_{C1}$ in this case too, the current $i_C'$ (=$i_C.i_{C1}$) is reduced.

When the transistor $Tr_1$ is ON, the voltage between the collector and the emitter of the transistor $Tr_1$ is about one third the DC voltage of the inverter due to the function of the Zener diode $DZ_1$.

According to the first embodiment, transistors with a low breakdown voltage can be used for the current control devices of the noise-compensation-current supply circuit 6A. Therefore, the use of transistors with the low breakdown voltage facilitates speeding up the noise compensation operation as compared with the use of transistors with a high breakdown voltage.

According to the first embodiment, since the noise current is surely reduced even when the inverter is operated at a high frequency and since it is not necessary to add a high frequency filter, the number of constituent parts and components is prevented from increasing, the circuit configuration from being complicated, and the manufacturing costs from soaring.

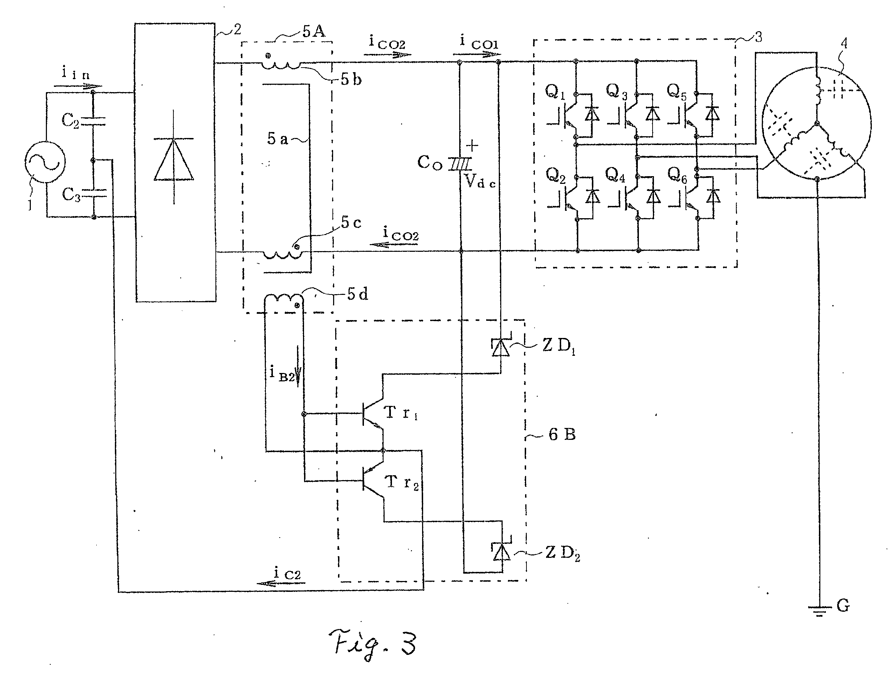

Figure 3 is a circuit diagram of an electric power conversion apparatus including a noise reduction apparatus according to a second embodiment of the invention. In Figure 3 the same reference numerals as used in Figure 1 are used to designate the same constituent elements and their duplicated explanations are omitted for the sake of simplicity. The noise reduction apparatus according to the second embodiment reduces the normal mode noise, which flows between the AC power supply and the load via the electric power conversion apparatus.

According to the second embodiment, the polarity of the primary winding 5c in the noise current detector 5 is opposite to that of the primary winding 5c according to the first embodiment such that the secondary winding 5d detects the sum between the currents flowing through the primary windings 5b and 5c as a normal mode noise current. The normal mode noise current is a noise current caused by the on/off of the switching devices $Q_1$ through $Q_6$ of the inverter circuit 3 to flow between the AC power supply 1 and the induction motor 4 via the electric power conversion apparatus (including the rectifying circuit 2, the DC smoothing capacitor $C_O$, and the inverter circuit 3). The normal mode noise current flows through the path same with that of the ordinary load current.

The electric power conversion apparatus shown in Figure 3 includes a noise-compensation-current supply circuit 6B.

The coupling capacitor $C_1$ in Figure 1 is omitted from the noise-compensation-current supply circuit 6B. In the noise-compensation-current supply circuit 6B, the emitters of the transistors $Tr_1$ and $Tr_2$, at which the transistors $Tr_1$ and $Tr_2$ are connected to each other, is connected to the mutual connection point of the filter capacitors $C_2$ and $C_3$.

Now the operation of the noise-compensation-current supply circuit according to the second embodiment will be described.

A current $i_{CO1}$ flows from the capacitor $C_O$ in response to the on and off of the switching devices $Q_1$ through $Q_6$ of the inverter circuit 3. Since the voltage of the capacitor $C_O$ varies due to the current $i_{CO1}$, a noise current $i_{CO2}$ corresponding to the current $i_{CO1}$ flows from the side of the AC power supply 1.

The noise current $i_{CO2}$ causes a current $i_{B2}$ in the secondary winding 5d of a noise current detector 5A. The current $i_{B2}$, which has flowed in the base of the transistor $Tr_1$ or $Tr_2$, is amplified by the transistor $Tr_1$ or $Tr_2$, causing a current $i_{C2}$.

When the current $i_{CO2}$ flows, for example, in the direction indicated by the arrow in Figure 3, the current $i_{B2}$ flows through the secondary winding 5d of the noise current detector 5A to the direction indicated by the arrow in Figure 3. The current $i_{B2}$ switches on the transistor $Tr_1$, and a current $i_{C2}$ circulates from the capacitor $C_2$ to the capacitor $C_2$ via the positive terminal of the rectifying circuit 2, the primary winding 5b, the Zener diode $ZD_1$, and the transistor $Tr_1$.

Since the most part of the noise current $i_{CO2}$ flows as the current $i_{C2}$, the noise current $i_{CO2}$ circulates through the capacitor $C_2$ as described above without flowing through the AC power supply 1. Therefore, a current $i$in (= $i_{CO2}$.$i_{C2}$) flowing though the AC power supply 1 becomes small, and the noise voltage at the input side terminal of the rectifying circuit 2 is also reduced.

When the direction of the noise current $i_{CO2}$ is opposite to the direction shown in Figure 3, the direction of the current $i_{B2}$ flowing through the secondary winding 5d of the noise current detector 5A is also opposite to the flow direction shown in Figure 3. The current $i_{B2}$ switches on the transistor $Tr_2$, and the current $i_{C2}$ circulates from the capacitor $C_3$ to the capacitor $C_3$ via the transistor $Tr_2$, the Zener diode $ZD_2$, the primary winding 5c and the negative terminal of the rectifying circuit 2.

In this case, the $i_{CO2}$ is cancelled by the current $i_{C2}$ flowing in opposite thereto. The current $i$in (=$i_{C2}$.$i_{CO2}$) flowing though the AC power supply 1 becomes small, and the noise voltage at the input side terminal of the rectifying circuit 2 is also reduced.

According to the second embodiment, it is enough for the operating voltage (the voltage between the collector and the emitter) of the transistors $Tr_1$ and $Tr_2$ to be as high as the ripple voltage of the capacitor $C_O$, which is from several to several tens V for the general electric power conversion apparatus. By setting, when the operating voltage of the transistors $Tr_1$ and $Tr_2$ is several tens V, the Zener voltage of the Zener diodes $ZD_1$ and $ZD_2$ at (the DC voltage Vdc of the inverter circuit 3 — several tens V), it is possible to make the noise compensation current $i_{C2}$ flow in the same manner as according to the first embodiment using the transistors $Tr_1$ and $Tr_2$, the breakdown voltages thereof are low.

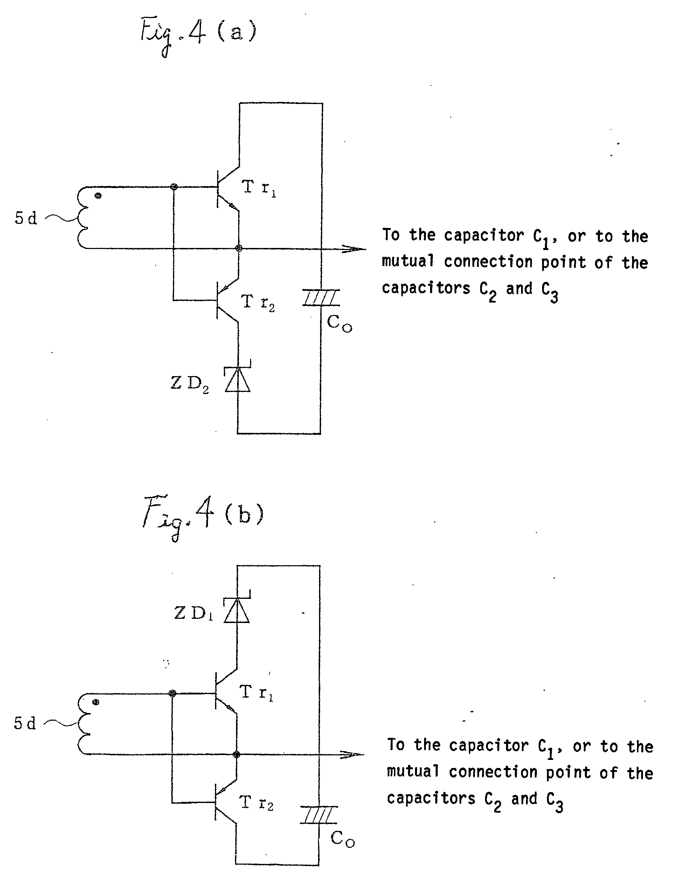

Figure 4(a) is a circuit diagram showing another connection of the Zener diode as a constant DC voltage supply in the noise-compensation-current supply circuit. Figure 4(b) is a circuit diagram showing still another connection of the Zener diode as a constant DC voltage supply in the noise-compensation-current supply circuit.

According to the foregoing first and the second embodiments, the Zener diodes $ZD_1$ and $ZD_2$ are connected to the transistors $Tr_1$ and $Tr_2$, respectively. Alternatively, the noise current compensation circuit may include only the Zener diode $ZD_2$ connected to the transistor $Tr_2$ as shown in Figure 4(a), or only the Zener diode $ZD_1$ connected to the transistor $Tr_1$ as shown in Figure 4(b).

The noise current compensation circuits including only one Zener diode work in the same way as the noise current compensation circuits according to the foregoing embodiments, since the coupling capacitor $C_1$ is connected to the mutual connection point of the transistors $Tr_1$ and $Tr_2$ according to the first embodiment, and the filter capacitors $C_2$ and $C_3$ are connected to the mutual connection point of the transistors $Tr_1$ and $Tr_2$ according to the second embodiment such that the coupling capacitor $C_1$ or the filter capacitors $C_2$ and $C_3$ keep the emitter potential of the transistors $Tr_1$ and $Tr_2$ at a predetermined value.

In the foregoing embodiments, bipolar transistors may be used for the semiconductor switching devices $Q_1$

through $Q_6$ of the inverter circuit 3 in substitution for the IGBT's, and FET's (field effect transistors) may be used for the current control devices of the noise-compensation-current supply circuits 5A and 5B in substitution for the bipolar transistors $Tr_1$ and $Tr_2$.

When it is enough to reduce the noise current $\mathbf{i}_C$ flowing to a specific direction, the noise-compensation-current supply circuit 5A or 5B may include only the transistor $Tr_1$ and the Zener diode $ZD_1$ or only the transistor $Tr_2$ and the Zener diode $ZD_2$.

Any DC voltage supply other than the Zener diode may be used for the constant DC voltage supply in the noise-compensation-current supply circuits 5A and 5B.

Alternatively, the voltage obtained by rectifying the voltage from a three-phase AC power supply by a three-phase rectifying bridge circuit may be used for the DC supply voltage of the inverter.

The invention is applicable to a single-phase inverter circuit driving a single-phase induction motor.

The invention is applicable also to a three-phase induction motor driving a load, the neutral point thereof is grounded.

Since the noise-compensation-current supply circuit according to the invention facilitates using devices exhibiting a low breakdown voltage, the operating speed of the noise-compensation-current supply circuit according to the invention is higher than the operating speed of the conventional noise-compensation-current supply circuit which uses devices exhibiting a high breakdown voltage equivalent to the DC voltage of the electric power conversion apparatus.

Therefore, the noise-compensation-current supply circuit according to the invention facilitates reducing the common mode noise current and the normal mode noise current more effectively. Since the noise-compensation-current supply circuit according to the invention does not increase the high frequency noises in the high frequency range, wherein the electric power conversion apparatus operates at 1 MHz or higher frequencies, it is not necessary to add a high frequency filter, and it becomes possible to reduce the number of constituent parts and elements and the size of the system.

Since the device with a low breakdown voltage is cheaper than the device with a high breakdown voltage and since the Zener diode used for the constant DC voltage supply is usually cheap, the noise-compensation-current supply circuit according to the invention facilitates providing a cheap noise reduction apparatus.

## Claims

1. A noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a noise current caused by the switching on and off of the semiconductor switching devices and flowing through the electric power conversion apparatus, the noise reduction apparatus comprising:

   a noise current detecting means, the noise current detecting means detecting the noise current and outputting a detection signal indicating the noise current;
   a noise-compensation-current supply means, the noise-compensation-current supply means supplying a noise compensation current for reducing the detected noise current to the electric power conversion apparatus;
   the noise-compensation-current supply means comprising a series circuit comprising a current control device and a constant DC voltage supply, the output current of the current control device being controlled based on the detection signal from the noise current detecting means, the current control device exhibiting a breakdown voltage lower than the voltage of the DC intermediate circuit.

2. The noise reduction apparatus according to Claim 1, wherein
   the noise current detecting means is connected to the DC intermediate circuit, whereby to detect a common mode noise current flowing from the electric power conversion apparatus to the grounding point via the load of the electric power conversion apparatus,
   the noise-compensation-current supply means generates, based on the detection signal from the noise current detecting means, a current for cancelling the noise current flowing through the DC intermediate circuit and supplies the current for cancelling to the DC intermediate circuit.

3. The noise reduction apparatus according to Claim 1, wherein
   the noise current detecting means is connected to the DC intermediate circuit, whereby to detect a normal mode noise current flowing between the AC power supply and the load of the electric power conversion apparatus via the electric power conversion apparatus,

the noise-compensation-current supply means generates, based on the detection signal from the noise current detecting means, a current for cancelling the noise current flowing through the DC intermediate circuit and supplies the current for cancelling to the DC intermediate circuit.

4. A noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a common mode noise current caused by the switching on and off of the semiconductor switching devices and flowing from the electric power conversion apparatus to the grounding point via the load of the electric power conversion apparatus, the noise reduction apparatus comprising:

a noise current detecting means comprising a transformer, the transformer detecting the difference between the noise current flowing through one of the power supply lines of the DC intermediate circuit and the noise current flowing through the other one of the power supply lines, the noise current detecting means outputting a detection signal indicating the current difference;
a noise-compensation-current supply means, the noise-compensation-means supply circuit supplying a noise compensation current for reducing the detected noise current to the electric power conversion apparatus;
the noise-compensation-current supply means comprising a pair of current control devices and a constant DC voltage supply or a pair of constant DC voltage supplies;
the first output terminals of the respective current control devices being grounded, the current control devices controlling the output current thereof based on the detection signal from the transformer;
the constant DC voltage supply being connected between the second output terminal of either one of the current control devices and either one of the terminals of the DC smoothing capacitor, or the constant DC voltage supplies being connected between the respective second output terminals of the current control devices and the respective terminals of the DC smoothing capacitor; and
the current control devices exhibiting a breakdown voltage lower than the voltage of the DC intermediate circuit.

5. A noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a normal mode noise current caused by the switching on and off of the semiconductor switching devices and flowing between the AC power supply and the load of the electric power conversion apparatus via the electric power conversion apparatus, the noise reduction apparatus comprising:

a noise current detecting means comprising a transformer, the transformer detecting the sum of the noise current flowing through one of the power supply lines of the DC intermediate circuit and the noise current flowing through the other one of the power supply lines, the noise current detecting means outputting a detection signal indicating the current sum;
a noise-compensation-current supply means, the noise-compensation-means supply circuit supplying a noise compensation current for reducing the detected noise current to the electric power conversion apparatus;
the noise-compensation-current supply means comprising a pair of current control devices and a constant DC voltage supply or pair of constant DC voltage supplies;
the first output terminals of the respective current control devices being connected to the input side of the converter, the current control devices controlling the output current thereof based on the detection signal from the transformer;
the constant DC voltage supply being connected between the second output terminal of either one of the current control devices and either one of the terminals of the DC smoothing capacitor, or the constant DC voltage supplies being connected between the respective second output terminals of the current control devices and the respective terminals of the DC smoothing capacitor; and
the current control devices exhibiting a breakdown voltage lower than the voltage of the DC intermediate circuit.

6. A noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a common mode noise current caused by the switching on and off of the semiconductor switching devices and flowing from the electric power conversion apparatus to the grounding point via the load of the electric power conversion apparatus, the noise reduction apparatus comprising:

a noise current detecting means comprising a transformer, the transformer detecting the difference between the noise current flowing through one of the power supply lines of the DC intermediate circuit and the noise current flowing through the other one of the power supply lines, the noise current detecting means outputting a detection signal indicating the current difference;

a noise-compensation-current supply means, the noise-compensation-means supply circuit supplying a noise compensation current for reducing the detected noise current to the electric power conversion apparatus;

the noise-compensation-current supply means comprising a series circuit comprising a first current control device and a second current control device, and a constant DC voltage supply connected between one end of the series circuit and the DC smoothing capacitor;

the first current control device and the second control device switching on and off in opposite to each other based on the detection signal from the transformer;

the mutual connection point of the first current control device and the second current control device being grounded; and

the first current control device and the second current control device exhibiting a breakdown voltage lower than the voltage of the DC intermediate circuit.

7. A noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a normal mode noise current caused by the switching on and off of the semiconductor switching devices and flowing between the AC power supply and the load of the electric power conversion apparatus via the electric power conversion apparatus, the noise reduction apparatus comprising:

a noise current detecting means comprising a transformer, the transformer detecting the sum of the noise current flowing through one of the power supply lines of the DC intermediate circuit and the noise current flowing through the other one of the power supply lines, the noise current detecting means outputting a detection signal indicating the current sum;

a noise-compensation-current supply means, the noise-compensation-means supply circuit supplying a noise compensation current for reducing the detected noise current to the electric power conversion apparatus;

the noise-compensation-current supply means comprising a series circuit comprising a first current control device and a second current control device, and a constant DC voltage supply connected between one end of the series circuit and the DC smoothing capacitor;

the first current control device and the second current control device switching on and off in opposite to each other based on the detection signal from the transformer;

the mutual connection point of the first current control device and the second current control device being connected to the input side of the converter; and

the first current control device and the second current control device exhibiting a breakdown voltage lower than the voltage of the DC intermediate circuit.

8. A noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a common mode noise current caused by the switching on and off of the semiconductor switching devices and flowing from the electric power conversion apparatus to the grounding point via the load of the electric power conversion apparatus, the noise reduction apparatus comprising:

a noise current detecting means comprising a transformer, the transformer detecting the difference between the noise current flowing through one of the power supply lines of the DC intermediate circuit and the noise current flowing through the other one of the power supply lines, the noise current detecting means outputting a detection signal indicating the current difference;

a noise-compensation-current supply means, the noise-compensation-means supply circuit supplying a noise compensation current for reducing the detected noise current to the electric power conversion apparatus;

the noise-compensation-current supply means comprising a series circuit comprising a first current control device and a second current control device, a first constant DC voltage supply, and a second constant DC voltage supply, the first constant DC voltage supply and the second constant DC voltage supply being connected between the respective ends of the series circuit and the respective terminals of the DC smoothing capacitor;

the first current control device and the second control device switching on and off in opposite to each other based on the detection signal from the transformer;

the mutual connection point of the first current control device and the second current control device being grounded; and

the first current control device and the second current control device exhibiting a breakdown voltage lower than the voltage of the DC intermediate circuit.

9. A noise reduction apparatus for an electric power conversion apparatus, the electric power conversion apparatus including a converter connected to an AC power supply, a DC intermediate circuit connected to the DC output side of the converter, an inverter connected to the DC intermediate circuit, the inverter including semiconductor switching devices, and a DC smoothing capacitor connected to the DC intermediate circuit, the noise reduction apparatus reducing a normal mode noise current caused by the switching on and off of the semiconductor switching devices and flowing between the AC power supply and the load of the electric power conversion apparatus via the electric power conversion apparatus, the noise reduction apparatus comprising:

a noise current detecting means comprising a transformer, the transformer detecting the sum of the noise current flowing through one of the power supply lines of the DC intermediate circuit and the noise current flowing through the other one of the power supply lines, the noise current detecting means outputting a detection signal indicating the current sum;

a noise-compensation-current supply means, the noise-compensation-means supply circuit supplying a noise compensation current for reducing the detected noise current to the electric power conversion apparatus;

the noise-compensation-current supply means comprising a series circuit comprising a first current control device and a second current control device, a first constant DC voltage supply, and a second constant DC voltage supply, the first constant DC voltage supply and the second constant DC voltage supply being connected between the respective ends of the series circuit and the respective ends of the DC smoothing capacitor;

the first current control device and the second control device switching on and off in opposite to each other based on the detection signal from the transformer;

the mutual connection point of the first current control device and the second current control device being connected to the input side of the converter; and

the first current control device and the second current control device exhibiting a breakdown voltage lower than the voltage of the DC intermediate circuit.

10. The noise reduction apparatus according to any of Claim 4, wherein the first output terminals of the current control devices are grounded via a coupling capacitor.

11. The noise reduction apparatus according to any of Claim 6, wherein the output terminals, connected directly to each other, of the first and second current control devices are grounded via a coupling capacitor.

12. The noise reduction apparatus according to any of Claim 8, wherein the output terminals, not connected to any constant DC voltage supply, of the first and second current control devices are grounded via a coupling capacitor.

13. The noise reduction apparatus according to any of Claim 5, wherein the first output terminals of the current control devices are connected to the mutual connection point of filter capacitors connected between the input terminals of the converter.

14. The noise reduction apparatus according to any of Claim 7, wherein the output terminals, connected directly to each other, of the first and second current control devices are connected to the mutual connection point of filter capacitors connected between the input terminals of the converter.

15. The noise reduction apparatus according to any of Claim 9, wherein the output terminals, not connected to any constant DC voltage supply, of the first and second current control devices are connected to the mutual connection point of filter capacitors connected between the input terminals of the converter.

16. The noise reduction apparatus according to any of Claims 1, 4, 5, 6, 7, 8 or 9, wherein the constant DC voltage supply comprises a Zener diode.

Fig. 1

Fig. 2

Fig. 3

EP 1 220 432 A2

## Fig.4 (a)

To the capacitor $C_1$, or to the mutual connection point of the capacitors $C_2$ and $C_3$

## Fig.4 (b)

To the capacitor $C_1$, or to the mutual connection point of the capacitors $C_2$ and $C_3$

Fig. 5

EP 1 220 432 A2